# EUROPEAN PATENT APPLICATION

(11) **EP 4 574 512 A1**
(43) Date of publication of application: **25.06.2025**
(21) Application number: 23218431.7
(22) Date of filing: 20.12.2023
(51) Int. Cl.: B60L 1/00, B60L 53/16, B60L 53/18, B60L 53/302, B60L 53/50, B60L 53/53, B60L 55/00, H01M 10/625

(54) **CHARGING SYSTEM FOR A VEHICLE COMPRISING CHARGER COOLING SYSTEM**

(71) Applicant: VOLVO TRUCK CORPORATION, 405 08 Göteborg (SE)
(72) Inventor: PERSSON, Arvid, SE-417 44 GÖTEBORG (SE); AHMED, Hatem, SE-415 65 GÖTEBORG (SE)
(74) Representative: Kransell & Wennborg KB

(57) **Abstract**

A charging system (100) of a vehicle, the charging system comprising: an energy storage (102); a charging connector (104) configured to be connected to an external charger (106) for charging the energy storage; a vehicle energy storage and/or charging circuitry (126) cooling system (108) having a fluid cooling circuit; a heat exchanger (110) thermally coupled to the fluid cooling circuit; and a coolant connector (112) configured to connect the heat exchanger to an external waste heat recovery system (114).

## Description

### TECHNICAL FIELD

The disclosure relates generally to a charging system for a vehicle. In particular aspects, the disclosure relates to energy recovery in a charging system for an electric or hybrid vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When charging a vehicle battery, energy losses due to heating can occur at various stages of the charging process. These losses are primarily a result of resistance encountered within the charging system and are commonly referred to as resistive losses or heat losses. Energy losses due to heating have consequences such as reduced charging efficiency, increased charging time and heat dissipation challenges. Efforts are continuously made to minimize energy losses due to heating during charging processes. Advancements in charging technologies, such as improved cable designs, efficient charging algorithms, and better heat dissipation systems, can help reduce these losses and enhance the overall charging efficiency of electric vehicle batteries. However, there is still a need to improve the charging infrastructure to address issues related to heat losses during charging.

### SUMMARY

According to a first aspect of the disclosure, it is provided a charging system of a vehicle, the charging system comprising: an energy storage; a charging connector configured to be connected to an external charger for charging the energy storage; a vehicle battery and/or charging circuitry cooling system having a fluid cooling circuit; a heat exchanger thermally coupled to the fluid cooling circuit; and a coolant connector configured to connect the heat exchanger to an external waste heat recovery system.

The first aspect of the disclosure may seek to improve energy efficiency during charging of a battery in a vehicle. Heavy vehicles in particular may comprise large batteries which take a long time to charge, and charging may be performed at high currents, which in turn may result in heating of components of the battery and/or components of on-board charging circuitry of the vehicle. Such on-board vehicle charging systems may require cooling and a technical benefit of the present disclosure include that heat generated by the battery and/or by components in the vehicle can be transferred to an external waste heat recovery system where the heat can be converted to useful energy.

Optionally in some examples, including in at least one preferred example, the heat exchanger comprises a first inlet and a first outlet of a first internal cooling circuit and a second inlet and a second outlet of a second internal cooling circuit, the first internal cooling circuit being fluidly separated from the second internal cooling circuit. A technical benefit may include that the heat exchanger for the charger cooling system can operate with two separate cooling circuits so that the heat exchanger can operate even if no external waste heat recovery system is connected to the heat exchanger.

Optionally in some examples, including in at least one preferred example, the coolant connector is configured to form a closed circuit between the heat exchanger and the external waste heat recovery system. A technical benefit may include that there is no mixing of cooling fluids between the vehicle charger cooling system and the waste heat recovery system. Accordingly, the vehicle charger cooling system can operate independently of the waste heat recovery system without risk of contamination of the respective cooling fluids.

Optionally in some examples, including in at least one preferred example, it is provided a charging assembly for a vehicle comprising the charging system according to any of the aforementioned examples arranged in a vehicle; and a waste heat recovery system arranged externally to the vehicle and configured generate power from heat.

Optionally in some examples, including in at least one preferred example, the waste heat recovery system is configured to provide power to a vehicle charging station. A technical benefit may include that power generated by the waste heat recovery system can be used to directly charge the vehicle, thereby improving the efficiency of the charging since there is no need to transfer or store energy.

Optionally in some examples, including in at least one preferred example, the waste heat recovery system is configured to provide power to an energy storage arranged externally to the vehicle. A technical benefit may include that storing surplus of power in a separate unit will allow the flexibility to use the power stored for different use cases.

Optionally in some examples, including in at least one preferred example, the energy storage arranged externally to the vehicle is configured to be connected to the charging connector to provide power to the vehicle. A technical benefit may include that stored energy can be used when required, for example when the grid is unavailable to provide power, thereby offering an improved flexibility of the charging assembly.

Optionally in some examples, including in at least one preferred example, the waste heat recovery system is configured to provide power to the vehicle via a second charging connector of the vehicle. A technical benefit may include that power can be provided to a separate power system of the vehicle if required.

Optionally in some examples, including in at least one preferred example, the waste heat recovery system is thermally coupled to a cooling system of a vehicle charging station to transfer heat from the vehicle charging station to the waste heat recovery system. A technical benefit may include that the waste heat recovery system can be used to recover energy from both the vehicle and from the charging station, thereby further reducing thermal losses during the charging process.

Optionally in some examples, including in at least one preferred example, the waste heat recovery system is configured to provide power to a power grid. A technical benefit may include that power can be recovered also in situations where the power cannot be provided to the vehicle. Moreover, by providing regenerated power to the power grid from the waste heat recovery system conventional external chargers can be used without having to modify chargers in any way.

Optionally in some examples, including in at least one preferred example, the waste heat recovery system is arranged in the same physical unit as the charging station. A technical benefit may include that the described charging assemblies can be easily introduced to market and placed at charging locations.

Optionally in some examples, including in at least one preferred example, the waste heat recovery system is provided as a separate unit arranged separately from the charging station. A technical benefit may include that the waste heat recovery system can be introduced independently of existing charging infrastructure. It is however desirable that the waste heat recovery system is arranged as close to the vehicle as possible to minimize losses due to cooling in cables connecting the vehicle to the waste heat recovery system. Providing the waste heat recovery system as a separate unit allows it to be placed in a convenient manner to be close to the vehicle.

Optionally in some examples, including in at least one preferred example, the waste heat recovery system is an Organic Rankine Cycle (ORC) system. A technical benefit may include that an ORC-system is efficient for energy generation when the heated fluid is at relatively low temperatures, such as in the range of 30°C - 40°C. The temperature of a battery or of charging circuitry in a vehicle often does not exceed 30°C - 40°C during charging and it is therefore important to have a waste heat recovery system which can operate at such temperatures. However, other types of power generation techniques are also available and possible to use.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary charging system of a vehicle and a charging assembly comprising the charging system according to an example.
**FIG. 2** is an exemplary charging system of a vehicle and a charging assembly comprising the charging system according to an example.
**FIG. 3** is an exemplary charging system of a vehicle and a charging assembly comprising the charging system according to an example.
**FIG. 4** is an exemplary charging system of a vehicle and a charging assembly comprising the charging system according to an example.
**FIG. 5** is an exemplary charging system of a vehicle and a charging assembly comprising the charging system according to an example.
**FIG. 6** is an exemplary charging system of a vehicle and a charging assembly comprising the charging system according to an example.
**FIG. 7** is an exemplary charging system of a vehicle and a charging assembly comprising the charging system according to an example.
**FIG. 8** is an exemplary charging system of a vehicle and a charging assembly comprising the charging system according to an example.
**FIG. 9** is a charging system of a vehicle according to an example.

### DETAILED DESCRIPTION

The detailed description set forth below provides information and examples of the disclosed technology with sufficient detail to enable those skilled in the art to practice the disclosure.

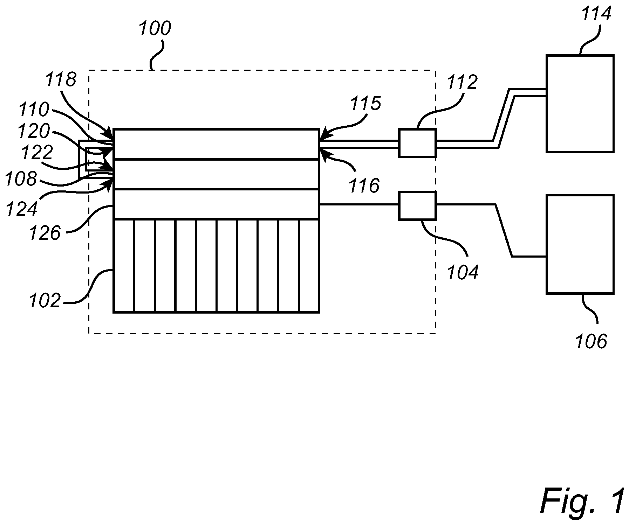

**FIG. 1** is an exemplary charging system 100 of a vehicle according to an example. The charging system 100 comprises an energy storage 102 for example in the form of a battery, a charging connector 104 configured to be connected to an external charger 106 for charging the energy storage; a vehicle energy storage and/or charging circuitry 126 cooling system 108 having a fluid cooling circuit; a heat exchanger 110 thermally coupled to the fluid cooling circuit; and a coolant connector 112 configured to connect the heat exchanger to an external waste heat recovery system 114.

During charging of the battery, the battery becomes warm and also components of the charging circuitry of the vehicle such as voltage converters may become warm. For DC-charging it is mainly the battery which is heated since no voltage conversion is required while for AC-charging, also the AC/DC voltage converters may require cooling. Moreover, cables connecting the charging station 106 to the vehicle as well as internal cables of the vehicle may also be heated during charging. The external charger 106 may for example be a dedicated charging station but it may in principle be any power source capable of providing power to the vehicle for charging the battery 102.

The generated heat is indicative of energy losses in the charging system, and it is advantageous to be able to convert the generated heat back into useful electrical energy, which can be achieved by means of the described system. It is possible to provide one or both of the vehicle battery 102 and the charging circuitry 126 with a cooling system 108 having a fluid cooling circuit (not shown). The cooling system may comprise an individual cooling circuit for each of the vehicle battery 102 and the charging circuitry 126 or it may be a common cooling circuit arranged to cool both of the vehicle battery 102 and the charging circuitry 126.

In the illustrated charging system 100 the heat exchanger further comprises a first inlet 115 and a first outlet 116 of a first internal cooling circuit and a second inlet 118 and a second outlet 120 of a second internal cooling circuit, the first internal cooling circuit being fluidly separated from the second internal cooling circuit. It is thereby possible to connect the heat exchanger 110 to the external waste heat recovery system 114 without having to connect the cooling circuit of the vehicle with the cooling circuit of the waste heat recovery system 114, thereby avoiding possible contamination of the respective cooling fluids. In the heat exchanger, heat is transferred from the second internal cooling circuit coupled to the vehicle cooling system to the first internal cooling circuit which is connected to the waste heat recovery system 114. The separate first and second cooling circuits also allows the vehicle cooling system to operate independently in situations where no waste heat recovery system is connected during charging.

The coolant connector 112 is advantageously configured to form a closed circuit between the heat exchanger 110 and the external waste heat recovery system 114 to improve efficiency by reducing possible losses and to also minimize the risk of contamination of the coolant. Moreover, the coolant connector 112 may be located adjacent to the charging connector to simplify connection of the waste heat recovery system during charging.

The waste heat recovery system 114 may be an Organic Rankine Cycle (ORC) system which is suitable for power generation in for temperatures in the range of 30°C - 40°C which are common temperatures which a cooling fluid will reach in the vehicle during charging of a battery. If higher temperatures are anticipated, other types of waste heat recovery technologies can be used in the waste heat recovery system 114.

Furthermore, the waste heat recovery system 114 may either be provided as a separate unit arranged separately from the charging station 106 as illustrated in Fig. 1 or it may be arranged in the same physical unit as the charging station.

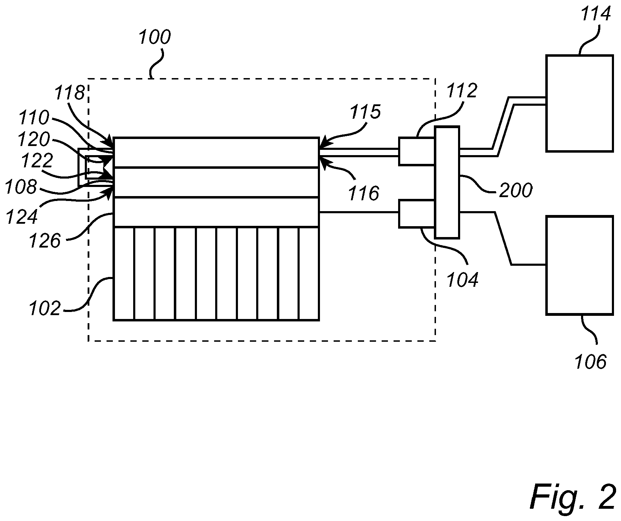

**FIG. 2** is an exemplary charging system 100 of a vehicle according to an example where the charging connector 104 and the coolant connector 114 are arranged together in a single mechanical connecting element 200 which simplifies use and ensures that a waste heat recovery system is connected and used when available. The single connecting element 200 is preferably also configured so that it is possible to connect only a charger to the vehicle in situations where there is no waste heat recovery system 114. In the described example when there is a single mechanical connecting element 200, there may also be a common cable configured to connect the charging circuitry 126 to both of the external charger 106 and the waste heat recovery system 114.

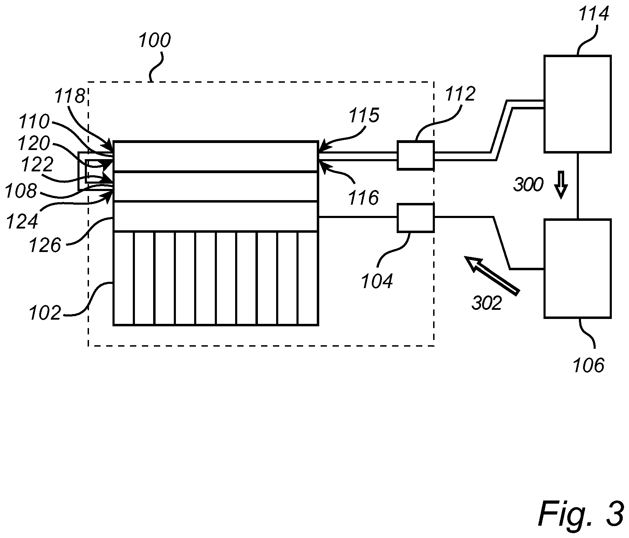

**FIG. 3** is an exemplary charging assembly comprising a charging system 100 where the waste heat recovery system 114 is configured to provide power to a vehicle charging station 106. Arrows 300 and 302 of Fig. 3 illustrate exemplary power flows where generated power flows from the waste heat recovery system 114 to the charging station 106 where it is subsequently transferred 302 back to the vehicle to charge the battery. The efficiency of the charging is thereby increased, and the amount of energy drawn from a power grid to charge the battery can be reduced.

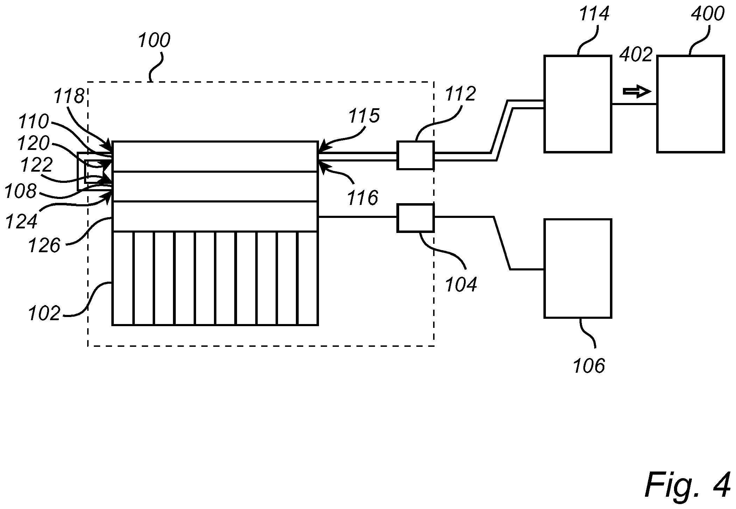

**FIG. 4** is an exemplary charging assembly comprising a charging system 100 where the waste heat recovery system 114 is configured to provide power to an energy storage 400 arranged externally to the vehicle as illustrated by arrow 402. By charging an external energy storage using power recovered during the charged process, the stored energy can for example be sold to the grid, be used to balance the grid or be used to charge other vehicles.

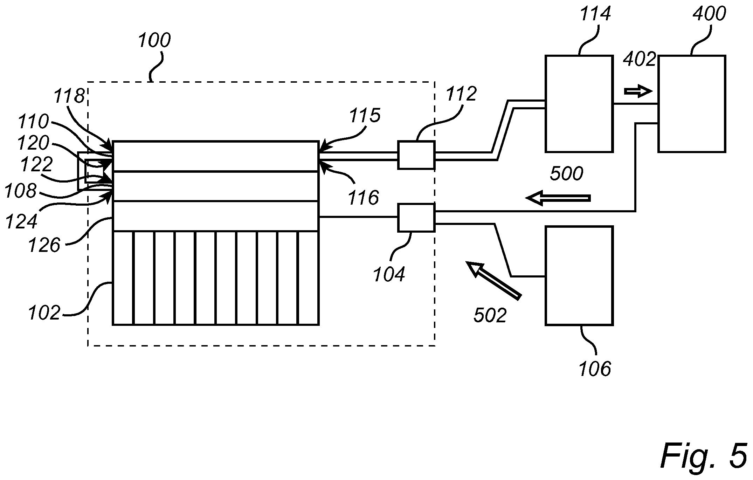

**FIG. 5** is an exemplary charging assembly comprising a charging system 100 where the energy storage 400 arranged externally to the vehicle is configured to be connected to the charging connector to provide power 500 to the vehicle. Power can thereby be provided to the vehicle from both of the external energy storage 400 as well as from 502 the external charger, meaning that there is no need for connecting the waste heat recovery system to the external charger. This may simplify integration of waste heat recovery system in existing charger infrastructure since there is no need to modify existing chargers.

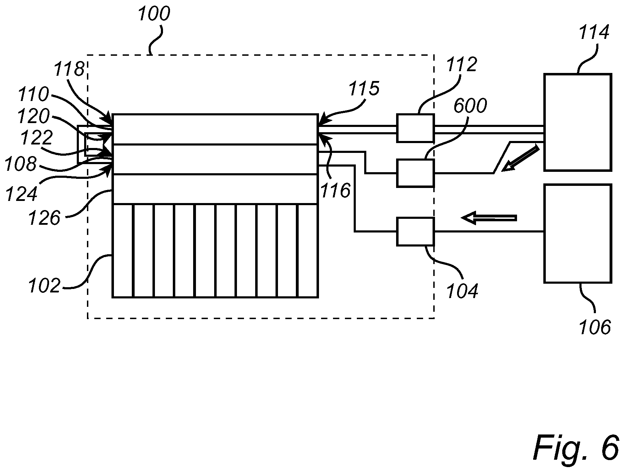

**FIG. 6** **(change)** is an exemplary charging assembly comprising a charging system 100 where the waste heat recovery system is configured to provide power to the vehicle via a second charging connector 600 of the vehicle. The power can for example be provided to a separate power system of the vehicle operating at a different voltage, or the power may be provided to the on-board charger 126 for charging the battery 102.

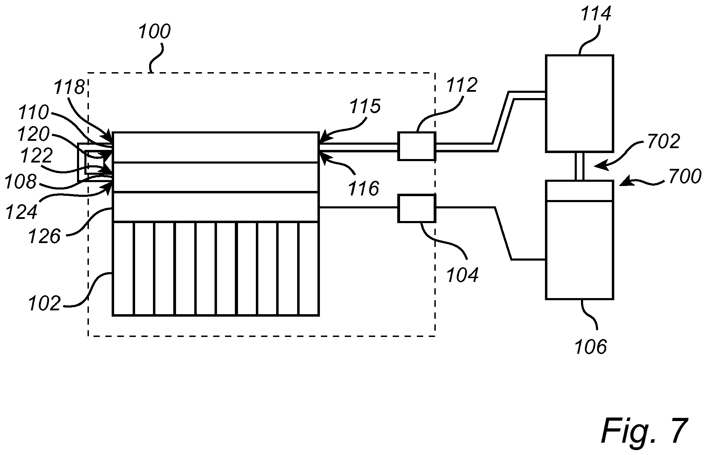

**FIG. 7** is an exemplary charging assembly where the waste heat recovery system 106 is thermally coupled to a cooling system 700 of a vehicle charging station 106 to transfer heat from the vehicle charging station 106 to the waste heat recovery system 114. Since the charging station may also generate heat, it can be advantageous to be able or recover energy also from the heat generated in the charging station 106. The connection 702 between the charging station 106 and the waste heat recovery system 114 is a fluid connection for transferring a heated cooling fluid to the waste heat recovery system 114. The fluid connection may advantageously connect a cooling system of the charging station 106 directly to the waste heat recovery system 114 so that the two share the same cooling fluid, thereby preventing energy losses in conversion steps.

The vehicle charging station 106 may also be equipped with a heat exchanger (not shown) in a similar manner as described with reference to Fig. 1 where the heat exchanger comprises two separate cooling circuits for transferring heat from components of the vehicle charging station 106 to the cooling fluid which is subsequently transferred to the waste heat recovery system 114.

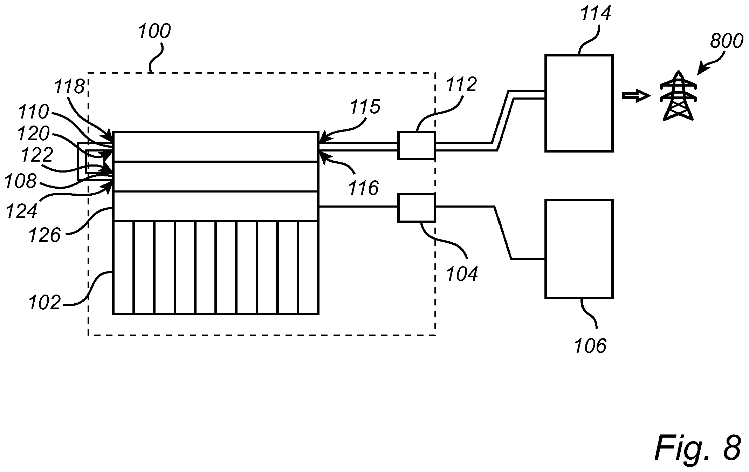

**FIG.** 8 is an exemplary charging assembly where the waste heat recovery system 114 is configured to provide power to a power grid 800. The waste heat recovery system 114 is thereby configured to generate and condition power with respect to Voltage regulation, Power Quality and Frequency Adjustments so that the generated power can be provided directly to the grid. The waste heat recovery system 114 can thereby provide a stand-alone system without being dependent on or connected to existing charging infrastructure.

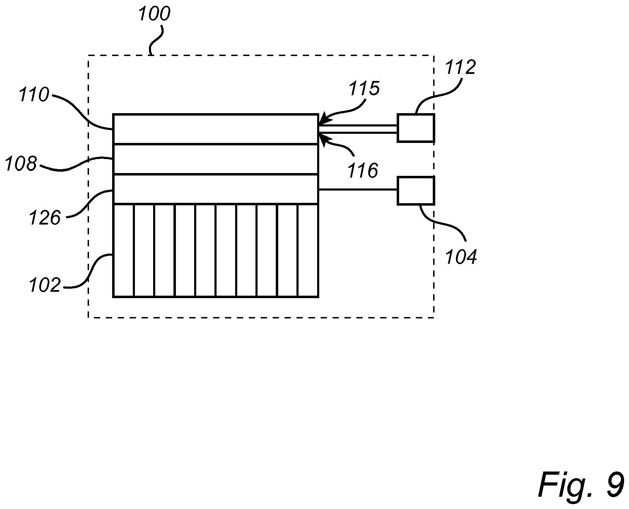

**FIG. 9** is another view of **FIG. 1****,** according to an example illustrating a charging system 100 of a vehicle, the charging system comprising: an energy storage 102; a charging connector 104 configured to be connected to an external charger for charging the energy storage 102; a vehicle energy storage and/or charging circuitry 126 cooling system 108 having a fluid cooling circuit; a heat exchanger 110 thermally coupled to the fluid cooling circuit; and a coolant connector 112 configured to connect the heat exchanger 110 to an external waste heat recovery system.

Example 1. A charging system (100) of a vehicle, the charging system comprising: an energy storage (102); a charging connector (104) configured to be connected to an external charger (106) for charging the energy storage; a vehicle energy storage and/or charging circuitry (126) cooling system (108) having a fluid cooling circuit; a heat exchanger (110) thermally coupled to the fluid cooling circuit; and a coolant connector (112) configured to connect the heat exchanger to an external waste heat recovery system (114).

Example 2. The charging system according to example 1, wherein the heat exchanger comprises: a first inlet (115) and a first outlet (116) of a first internal cooling circuit and a second inlet (118) and a second outlet (120) of a second internal cooling circuit, the first internal cooling circuit being fluidly separated from the second internal cooling circuit.

Example 3. The charging system according to example 1 or 2, wherein the coolant connector (112) is configured to form a closed circuit between the heat exchanger and the external waste heat recovery system.

Example 4. The charging system according to any one of examples 1 to 3, wherein the charging connector and the coolant connector are arranged together in a single connecting element (200).

Example 5. A charging assembly for a vehicle comprising: the charging system (100) according to any one of examples 1 to 4 arranged in a vehicle; and a waste heat recovery system (114) arranged externally to the vehicle and configured generate power from heat.

Example 6. The charging assembly according to example 5, wherein the waste heat recovery system is configured to provide power to a vehicle charging station (106).

Example 7. The charging assembly according to example 5 or 6, wherein the waste heat recovery system is configured to provide power to an energy storage (400) arranged externally to the vehicle.

Example 8. The charging assembly according to example 7, wherein the energy storage arranged externally to the vehicle is configured to be connected to the charging connector to provide power to the vehicle.

Example 9. The charging assembly according to example 5, wherein the waste heat recovery system is configured to provide power to the vehicle via a second charging connector (600) of the vehicle.

Example 10. The charging assembly according to any one of examples 5 to 9, wherein the waste heat recovery system is thermally coupled to a cooling system (700) of a vehicle charging station to transfer heat from the vehicle charging station to the waste heat recovery system.

Example 11. The charging assembly according to any one of examples 5 to 10, wherein the waste heat recovery system is configured to provide power to a power grid (800).

Example 12. The charging assembly according to any one of examples 5 to 11, wherein the waste heat recovery system is arranged in the same physical unit as the charging station.

Example 13. The charging assembly according to any one of examples 5 to 11, wherein the waste heat recovery system is provided as a separate unit arranged separately from the charging station.

Example 14. The charging assembly according to any one of examples 5 to 13, wherein the waste heat recovery system is an Organic Rankine Cycle (ORC) system.

Example 15. The charging assembly according to any one of examples 5 to 14, further comprising a common cable configured to connect the charging system to both of the external charger and the waste heat recovery system.

Example 16. A vehicle comprising a charging system according to any one of examples 1 to 4.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A charging system (100) of a vehicle, the charging system comprising:
an energy storage (102);
a charging connector (104) configured to be connected to an external charger (106) for charging the energy storage;
a vehicle energy storage and/or charging circuitry (126) cooling system (108) having a fluid cooling circuit;
a heat exchanger (110) thermally coupled to the fluid cooling circuit; and
a coolant connector (112) configured to connect the heat exchanger to an external waste heat recovery system (114).

2. The charging system according to claim 1, wherein the heat exchanger comprises a first inlet (115) and a first outlet (116) of a first internal cooling circuit and a second inlet (118) and a second outlet (120) of a second internal cooling circuit, the first internal cooling circuit being fluidly separated from the second internal cooling circuit.

3. The charging system according to claim 1 or 2, wherein the coolant connector (112) is configured to form a closed circuit between the heat exchanger and the external waste heat recovery system.

4. The charging system according to any one of claims 1 to 3, wherein the charging connector and the coolant connector are arranged together in a single connecting element (200).

5. A charging assembly for a vehicle comprising:
the charging system (100) according to any one of claims 1 to 4 arranged in a vehicle; and
a waste heat recovery system (114) arranged externally to the vehicle and configured generate power from heat.

6. The charging assembly according to claim 5, wherein the waste heat recovery system is configured to provide power to a vehicle charging station (106).

7. The charging assembly according to claim 5 or 6, wherein the waste heat recovery system is configured to provide power to an energy storage (400) arranged externally to the vehicle.

8. The charging assembly according to claim 7, wherein the energy storage arranged externally to the vehicle is configured to be connected to the charging connector to provide power to the vehicle.

9. The charging assembly according to claim 5, wherein the waste heat recovery system is configured to provide power to the vehicle via a second charging connector (600) of the vehicle.

10. The charging assembly according to any one of claims 5 to 9, wherein the waste heat recovery system is thermally coupled to a cooling system (700) of a vehicle charging station to transfer heat from the vehicle charging station to the waste heat recovery system.

11. The charging assembly according to any one of claims 5 to 10, wherein the waste heat recovery system is configured to provide power to a power grid (800).

12. The charging assembly according to any one of claims 5 to 11, wherein the waste heat recovery system is arranged in the same physical unit as the charging station.

13. The charging assembly according to any one of claims 5 to 11, wherein the waste heat recovery system is provided as a separate unit arranged separately from the charging station.

14. The charging assembly according to any one of claims 5 to 13, wherein the waste heat recovery system is an Organic Rankine Cycle (ORC) system.

15. The charging assembly according to any one of claims 5 to 14, further comprising a common cable configured to connect the charging system to both of the external charger and the waste heat recovery system.
